# EUROPEAN PATENT APPLICATION

(11) **EP 4 697 027 A1**
(43) Date of publication of application: **18.02.2026**
(21) Application number: 24788473.7
(22) Date of filing: 06.03.2024
(51) Int. Cl.: G01N 35/10

(54) **AUTOMATIC ANALYSIS DEVICE AND CLEANING METHOD**

(30) Priority: 10.04.2023 JP 2023063241
(71) Applicant: HITACHI HIGH-TECH CORPORATION, Tokyo 105-6409 (JP)
(72) Inventor: SATO, Yusei, Tokyo 105-6409 (JP); MATSUOKA, Shinya, Tokyo 105-6409 (JP); HAYAKAWA, Shohei, Tokyo 105-6409 (JP)
(74) Representative: MERH-IP Matias Erny Reichl Hoffmann Patentanwälte PartG mbB
(86) International application number: PCT/JP2024/008628
(87) International publication number: WO 2024/214443

(57) **Abstract**

[Problem]

To provide an automatic analyzer and a cleaning method capable of suppressing the maintenance from becoming troublesome, the cost, and the device from becoming large in size and complicated, and so on, and capable of executing cleaning of a nozzle reliably by a simpler method.

[Solution]

In a cleaning method for a nozzle of an automatic analyzer including: a reaction container which stores a mixed liquid of a sample of an analysis object and a reagent used for analyzing the sample; and a nozzle which aspirates the mixed liquid of the reaction container, the cleaning method comprises: a preparation step for dispensing a probe cleaner of the nozzle to the reaction container; and a cleaning step for executing aspiration and discharging of the probe cleaner of the reaction container by the nozzle.

## Description

### Technical Field

The present invention relates to an automatic analyzer and a cleaning method.

### Background Art

An automatic analyzer causes blood, urine, or another biological sample (sample) to react with an analytical reagent that specifically reacts with a measurement target component in the sample, and quantitatively detects a complex generated by this reaction, thereby automatically measuring the measurement target component and outputting the result.

In such an automatic analyzer, each part needs to be cleaned, and for example, PTL 1 discloses a cleaning method in which a detection liquid in a reaction container in which measurement is completed is aspirated and discharged by a nozzle, and then a detergent or cleaning water is injected into and aspirated from the reaction container by the nozzle to clean an inside of the reaction container.

### Citation List

### Patent Literature

PTL 1: JP2010-066108A

### Summary of Invention

### Technical Problem

In the automatic analyzer, for example, a component in a sample may remain in a nozzle that aspirates and discharges the sample. When magnetic particles are used in a pre-process of the sample, the magnetic particles may adhere to and remain in the nozzle. Therefore, the automatic analyzer is generally provided with a mechanism for cleaning the nozzle. Such cleaning of the nozzle is often performed with water such as distilled water. However, a residue in the nozzle may not be sufficiently removed by cleaning with water due to chemical properties such as hydrophilicity and hydrophobicity, physical adhering to an uneven portion of a nozzle surface, and the like.

Since a remaining foreign matter in the nozzle leads to a decrease in analysis precision, it is necessary to sufficiently remove the residue. However, when an attempt is made to deal with the residue in the nozzle by periodically cleaning or replacing the nozzle by a user, maintenance becomes complicated, and an operation cost of the apparatus increases. Although it is conceivable to automatically clean the nozzle by separately providing a mechanism for supplying a liquid such as a probe cleaner containing an organic solvent to a cleaning mechanism, this leads to an increase in size, complexity, and cost of the analyzer.

The invention has been made in view of the above, and an object of the invention is to provide an automatic analyzer and a cleaning method capable of more reliably cleaning a nozzle by a simpler method.

### Solution to Problem

The present application includes a plurality of means for solving the above-described problems, and an example thereof is a cleaning method for a nozzle of an automatic analyzer, the automatic analyzer including a reaction container and the nozzle, the reaction container storing a mixed liquid of a sample of an analysis object and a reagent used for analyzing the sample, the nozzle aspirating the mixed liquid of the reaction container, and the cleaning method includes: a preparation step for dispensing a probe cleaner of the nozzle to the reaction container; and a cleaning step for executing aspiration and discharging of the probe cleaner of the reaction container by the nozzle.

### Advantageous Effects of Invention

According to the invention, the nozzle can be more reliably cleaned by a simpler method.

### Brief Description of Drawings

[FIG. 1] FIG. 1 is a plan view roughly illustrating an overall configuration of an automatic analyzer.
[FIG. 2] FIG. 2 is a drawing roughly illustrating the process contents of a magnetic particle process unit.
[FIG. 3] FIG. 3 is a drawing illustrating an example of difference of an operation in a pre-analysis process and a nozzle cleaning process.
[FIG. 4] FIG. 4 is a drawing illustrating the state of a nozzle cleaning operation related to a first embodiment.
[FIG. 5] FIG. 5 is a drawing illustrating the change of the liquid amount within the nozzle by aspiration and discharging of a cleaning reagent during the nozzle cleaning operation related to the first embodiment.
[FIG. 6] FIG. 6 is a drawing illustrating the state of a nozzle cleaning operation related to a second embodiment.
[FIG. 7] FIG. 7 is a drawing illustrating the change of the liquid amount within the nozzle by aspiration and discharging of a cleaning reagent during the nozzle cleaning operation related to the second embodiment.

### Description of Embodiments

Hereinafter, embodiments of the invention will be described with reference to the drawings. In the present embodiment, an automatic analyzer that includes a pre-process unit and an analysis unit will be described as an example, but the invention of the present application can be applied regardless of a type of analysis such as biochemical analysis or immune analysis as long as the analyzer is an apparatus involving aspiration and discharge of a liquid by a nozzle related to analysis.

### <First Embodiment>

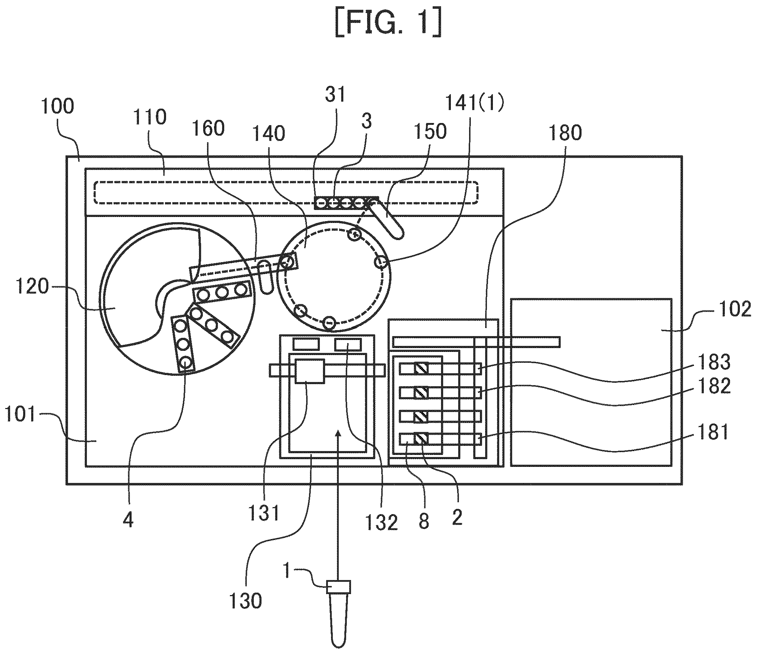

A first embodiment will be described with reference to FIGS. 1 to 5.

FIG. 1 is a plan view schematically illustrating an overall configuration of an automatic analyzer.

In FIG. 1, an automatic analyzer 100 is an apparatus that analyzes a specific component contained in a sample such as blood or urine supplied from a patient, and schematically includes a pre-process unit 101 and an analysis unit 102.

The pre-process unit 101 is a functional unit that performs a pre-process of a sample such as removal of a coexistent component using magnetic particles, and includes a sample container transportation mechanism 110 that transports a sample rack 31 on which a plurality of sample containers 3 storing a sample of an analysis object are mounted, and a reagent disk 120 that stores a plurality of reagent containers 4 storing a reagent used for analysis of the sample, a reaction container storage unit 130 that stores an unused reaction container 1 used for analysis of the sample, a disk-type incubator 140 that manages a temperature of a mixed liquid of the sample and the reagent stored in the reaction container 1 to promote a reaction, a reaction container transportation mechanism 131 that transports the reaction container 1 from the reaction container storage unit 130 to a reaction container storage unit 141 of the incubator 140, a sample dispensing mechanism 150 that dispenses the sample from one of the sample containers 3 transported to a sample dispensing position (sample container transportation mechanism side) by the sample container transportation mechanism 110 to the reaction container 1 placed on the incubator 140 and transported to a sample dispensing position (incubator side), a reagent dispensing mechanism 160 that dispenses the reagent from one of the reagent containers 4 transported to a reagent dispensing position (reagent disk side) by the reagent disk 120 to the reaction container 1 placed on the incubator 140 and transported to a reagent dispensing position (incubator side), and a magnetic particle process unit 180 that performs a process of sending, to the analysis unit 102, a stored material of the reaction container 1 transported by the reaction container transportation mechanism 131.

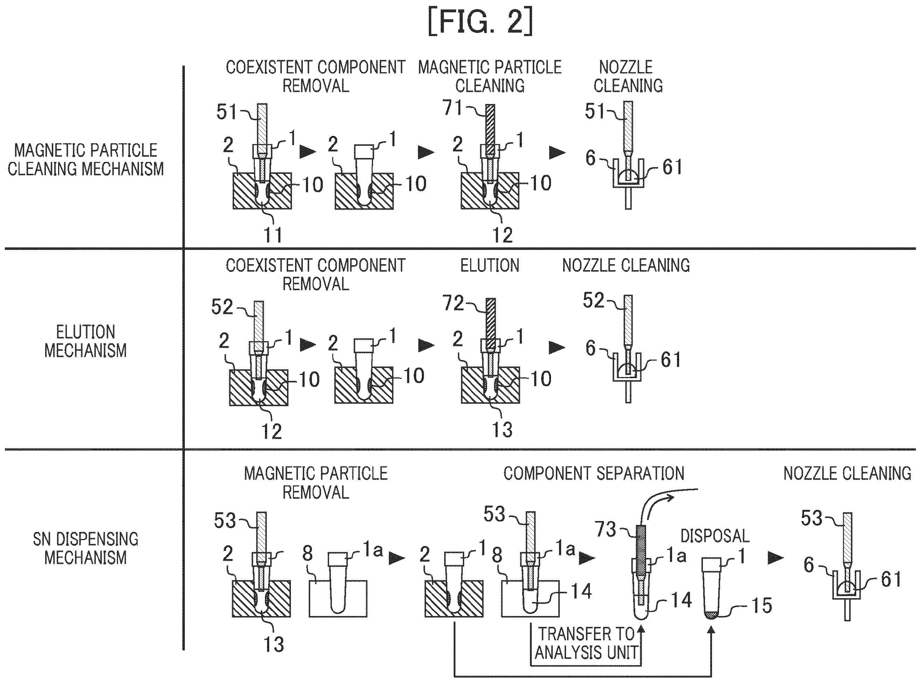

FIG. 2 is a drawing roughly illustrating process contents of the magnetic particle process unit.

As illustrated in FIG. 2, the magnetic particle process unit 180 includes, as a mechanism for transferring a solution (mixed liquid or the like) containing a measurement target stored in the reaction container 1 to the analysis unit 102, a magnetic particle cleaning mechanism 181 that performs a cleaning process (BW: Beads Wash) of cleaning magnetic particles 10 contained in the solution stored in the reaction container 1, an elution mechanism 182 that performs an elution process (Elu: Elution) of separating the measurement target from the magnetic particles, and an SN dispensing mechanism 183 that transfers only a solution (SN: Supernatant) containing the measurement target to another reaction container.

The magnetic particle cleaning mechanism 181, the elution mechanism 182, and the SN dispensing mechanism 183 each have a magnetic separator 2 for separating the magnetic particles in the reaction container 1. The magnetic separator 2 has a magnet disposed around a holding unit in which the reaction container 1 is provided, and by setting the reaction container in the magnetic separator, the magnetic particles 10 in the solution stored in the reaction container 1 can be adsorbed and held on an inner wall of the reaction container 1.

In a pre-analysis process performed by the pre-process unit 101, first, a sample is dispensed from the sample container 3 into the empty reaction container 1 of the incubator 140 using the sample dispensing mechanism 150. Subsequently, a reaction reagent is aspirated from the reagent container 4 mounted on the reagent disk 120 by using the reagent dispensing mechanism 160, and is discharged into the reaction container of the incubator 140 into which the sample is dispensed. The reaction reagent has various functions such as a function of releasing the measurement target in a mixed liquid with the sample and a function of promoting adsorption of the measurement target to the magnetic particles. Thereafter, the magnetic particles 10 are dispensed into the same reaction container 1 by the reagent dispensing mechanism 160. During the dispensing process so far, the reaction container 1 is held on the incubator 140 whose temperature is controlled to be constant, and the reaction of the measurement target in the reaction container 1 is promoted.

As illustrated in FIG. 2, in a process performed by the magnetic particle process unit 180, first, the reaction container 1 is transferred to the magnetic separator 2 of the magnetic particle cleaning mechanism 181. Next, an aspiration nozzle 51 of the magnetic particle cleaning mechanism 181 aspirates a solution 11 in the reaction container 1 and discards the solution 11 into a cleaning tank 6 (coexistent component removal). At this time, the magnetic particles 10 remain in the reaction container 1 by the function of the magnetic separator 2. Subsequently, a system probe cleaner 12 is discharged into the reaction container 1 by a discharging nozzle 71 different from the aspiration nozzle 51 (magnetic particle cleaning). Accordingly, the coexistent component not adsorbed to the magnetic particles 10 can be removed from the reaction container 1. Thereafter, the aspiration nozzle 51 moves to the cleaning tank 6, and an inside and outside of the aspiration nozzle 51 are cleaned by pure water 61 (nozzle cleaning).

Next, the reaction container 1 is transferred from the magnetic particle cleaning mechanism 181 to the magnetic separator 2 of the elution mechanism 182. Subsequently, an aspiration nozzle 52 different from the aspiration nozzle 51 of the magnetic particle cleaning mechanism 181 aspirates the system probe cleaner 12 in the reaction container 1 and discards the system probe cleaner 12 into the cleaning tank 6 during the nozzle cleaning (coexistent component removal). At this time, the magnetic particles 10 remain in the reaction container 1 by the function of the magnetic separator 2. Subsequently, a system reagent 13 is discharged into the reaction container 1 by a discharging nozzle 72 different from the discharging nozzle 71 of the magnetic particle cleaning mechanism 181 (elution). Accordingly, the magnetic particles 10 and the measurement target are separated from each other in the solution in the reaction container 1. During removal of the coexistent component, the aspiration nozzle 52 moves to the cleaning tank 6 and an inside and outside of the aspiration nozzle 52 are cleaned by the pure water 61 (nozzle cleaning).

Next, the reaction container 1 is transferred from the elution mechanism 182 to the magnetic separator 2 of the SN dispensing mechanism 183. Subsequently, an SN nozzle 53 aspirates a solution containing the measurement target (system reagent 13) from the reaction container 1, and discharges the solution to another reaction container 1a stored in a reaction container storage unit 8 of the SN dispensing mechanism 183 (magnetic particle removal). At this time, the magnetic particles 10 remain in the reaction container 1 by the function of the magnetic separator 2. Accordingly, a solution 14 of the measurement target from which the coexistent component and the magnetic particles 10 are removed can be obtained. Subsequently, the solution 14 containing the measurement target is transferred from the reaction container 1a to the analysis unit 102 by a transferring nozzle 73 (component separation). The reaction container 1 is transported to a reaction container disposal box 132 by the reaction container transportation mechanism 131 and disposed of. The SN nozzle 53 moves to the cleaning tank 6 after the solution 14 is discharged to the reaction container 1 of the reaction container storage unit 8, and an inside and outside of the SN nozzle 53 are cleaned by the pure water 61 (nozzle cleaning).

Here, the nozzle cleaning in the present embodiment will be described.

Components in a sample and the magnetic particles have hydrophobicity, and it is considered that such components and magnetic particles cannot be sufficiently removed by the nozzle cleaning with water. In particular, the aspiration nozzles 51, 52 and the SN nozzle 53 are used in a situation where substances and the magnetic particles in the reaction container 1 tend to adhere to the nozzles. Therefore, in the present embodiment, in the cleaning of the aspiration nozzles 51, 52, the SN nozzle 53, and the like, a nozzle cleaning process is performed using a special probe cleaner containing a liquid having high affinity with the components and the magnetic particles remaining in the nozzle, such as an organic solvent.

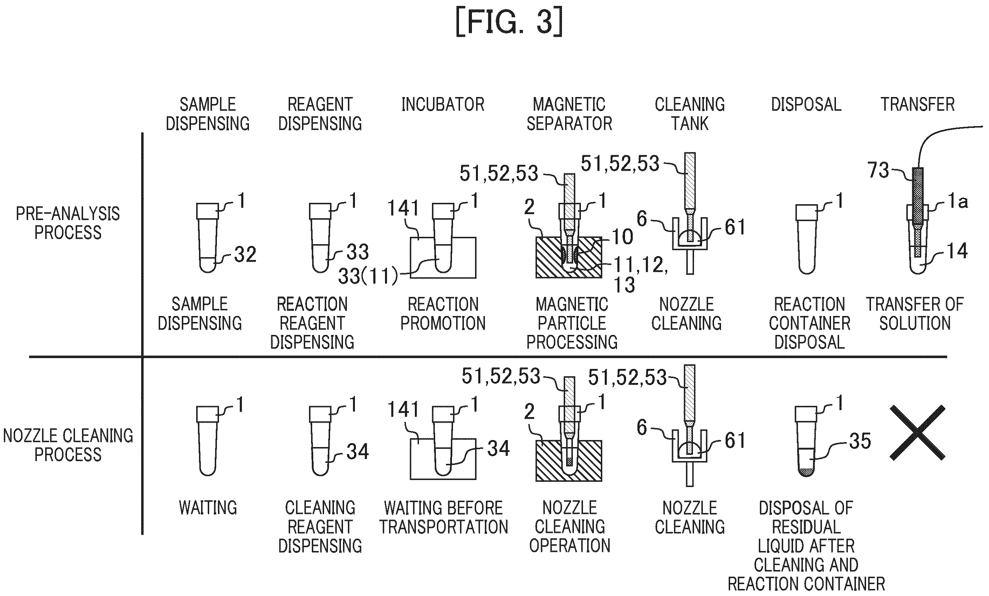

FIG. 3 is a drawing illustrating an example of differences of operations in the pre-analysis process and the nozzle cleaning process. In FIG. 3, the operation of the pre-analysis process is illustrated in a simplified manner in order to facilitate comparison with the operation of the nozzle cleaning process.

As illustrated in FIG. 3, in the pre-analysis process, first, in a sample dispensing step, a sample 32 is dispensed into the reaction container 1, and then, in a reagent dispensing step, the reaction reagent is dispensed to obtain a mixed liquid 33, and a reaction of the mixed liquid 33 is promoted in the incubator 140. Subsequently, the reaction container 1 storing the mixed liquid 33 (solution 11) subjected to the reaction promotion is transferred to the magnetic particle process unit 180, and transferred to the magnetic separator 2 in each of the processing steps in the magnetic particle cleaning mechanism 181, the elution mechanism 182, and the SN dispensing mechanism 183, and a series of processes related to the pre-analysis process including the aspiration of the solution 11, the system probe cleaner 12, and the system reagent 13 by the aspiration nozzles 51, 52 and the SN nozzle 53 are performed. Thereafter, the aspiration nozzles 51, 52 and the SN nozzle 53 move to the cleaning tank 6, and the inside and the outside of the nozzles are cleaned by the pure water 61. In addition, the reaction container 1 subjected to the analysis is disposed of, and the solution 14 containing the measurement target is transferred from the reaction container 1a to the analysis unit 102 by the transferring nozzle 73.

In contrast to the pre-analysis process as described above, in the nozzle cleaning process, first, a liquid related to analysis (for example, a sample, other reagents for analysis, magnetic particles, and the like) is not dispensed into the reaction container 1 and waits, and only a liquid for cleaning (a cleaning reagent, a probe cleaner, and the like: hereinafter referred to as a cleaning reagent 34) is dispensed into the reaction container 1 in a step corresponding to reagent dispensing.

Examples of a method of dispensing the cleaning reagent 34 into the reaction container 1 include a method of dispensing the cleaning reagent 34 filled in the sample container 3 into the reaction container 1 by the sample dispensing mechanism 150, and a method of dispensing the cleaning reagent 34 filled in the reagent container 4 into the reaction container 1 by the reagent dispensing mechanism 160.

When the sample dispensing mechanism 150 is used to supply the cleaning reagent 34, the cleaning reagent 34 suitable for cleaning the nozzles 51, 52, and 53 is filled in advance in the sample container 3, mounted on the sample rack 31, and supplied to the pre-process unit 101 of the automatic analyzer 100 via the sample container transportation mechanism 110. Identification of the sample container 3 containing the cleaning reagent 34 in the automatic analyzer 100 can be implemented by using a function normally used in the automatic analyzer 100, such as a method of using a barcode attached to the sample container 3 or a method of preparing a dedicated sample rack of the sample container 3 that stores the cleaning reagent 34 as the sample rack 31 for supplying the sample container 3. That is, when it is recognized that the cleaning reagent 34 is put in the sample container 3, the automatic analyzer 100 treats the liquid in the sample container 3 as the cleaning reagent 34, omits other analysis processes such as reagent dispensing, and performs the nozzle cleaning process.

When the reagent dispensing mechanism 160 is used to supply the cleaning reagent 34, the cleaning reagent 34 suitable for cleaning the nozzles 51, 52, and 53 is filled in the reagent container 4 in advance and mounted on the reagent disk 120. Identification of the reagent container 4 containing the cleaning reagent 34 in the automatic analyzer 100 is implemented using, for example, an RFID or a barcode for identifying a type of the reagent container. That is, when the nozzle cleaning process is required, the automatic analyzer 100 dispenses the cleaning reagent 34 into the reaction container 1 using the reagent dispensing mechanism 160, omits the subsequent processes for the reaction container 1, and performs the nozzle cleaning process.

As the cleaning reagent 34, a reagent dedicated to cleaning may be used, or a reagent for some measurement may be used. For example, it is possible to use, as the cleaning reagent 34, a probe cleaner dedicated to a special cleaning purpose and containing a liquid having high affinity with the components and the magnetic particles remaining in the nozzle, such as an organic solvent, or to use, as the cleaning reagent 34, a reagent having properties suitable for the nozzle cleaning (properties such as high affinity with components and magnetic particles remaining in the nozzle) among reagents used for analyzing the sample. Specifically, an organic solvent such as acetonitrile may be used as the reagent for measurement, and the reagent for measurement can also be used as the nozzle cleaning reagent 34.

The cleaning reagent 34 dispensed into the reaction container 1 is subjected to temperature adjustment in the incubator 140 as necessary before being transported to the magnetic particle process unit 180. Accordingly, a cleaning performance of the cleaning reagent 34 can be improved (optimized) .

Subsequently, the reaction container 1 storing the cleaning reagent 34 is transferred to the magnetic separators 2 of the magnetic particle cleaning mechanism 181, the elution mechanism 182, and the SN dispensing mechanism 183 of the magnetic particle process unit 180, and a nozzle cleaning operation of aspirating and discharging the cleaning reagent 34 by the aspiration nozzles 51, 52 and the SN nozzle 53 is performed. Thereafter, the aspiration nozzles 51, 52 and the SN nozzle 53 move to the cleaning tank 6, and the inside and the outside of the nozzles are cleaned by the pure water 61. In addition, the reaction container 1 subjected to the nozzle cleaning operation is disposed of together with a residual liquid 35 of cleaning degree.

As the method of dispensing the cleaning reagent 34 into the reaction container 1, there is a method using the magnetic particle cleaning mechanism 181 in addition to the above-described method. In the magnetic particle cleaning mechanism 181, the magnetic particles are cleaned with a system reagent or a mixed liquid with the system reagent. The system reagent is a reagent commonly used in the analyzer, and water, an acidic, alkaline buffer solution, or an organic solvent such as methanol or acetonitrile, or the like is used. Therefore, in the nozzle cleaning process, the reaction container 1 is supplied, without the sample or the reagent dispensed therein, to the magnetic particle cleaning mechanism 181 in an empty state, and here, the system reagent or the mixed liquid is discharged as the nozzle cleaning reagent 34. Thereafter, the step of removing the liquid inside the reaction container 1 in the magnetic particle cleaning process and the like are omitted, and the reaction container 1 storing the cleaning reagent 34 is supplied to a position of the nozzle.

The nozzle cleaning operation in the nozzle cleaning process will be described.

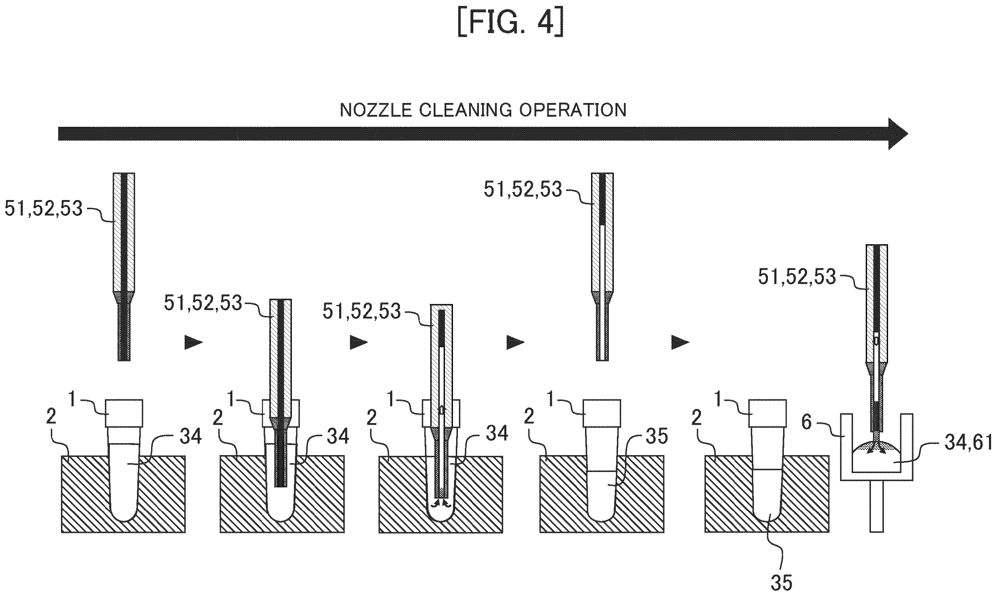

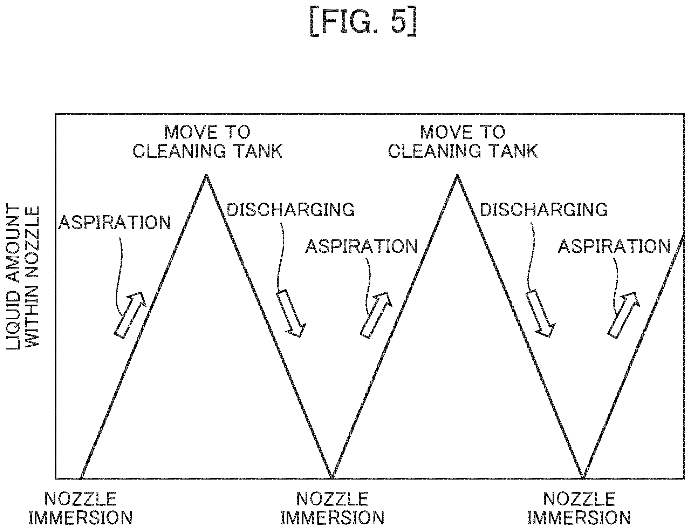

FIG. 4 is a diagram illustrating a state of the nozzle cleaning operation. In addition, FIG. 5 is a diagram illustrating a change in liquid amount in the nozzle due to aspiration and discharge of a cleaning detergent during the nozzle cleaning operation.

As illustrated in FIGS. 4 and 5, in the nozzle cleaning operation, the aspiration nozzles 51, 52 and the SN nozzle 53 are inserted and immersed in the cleaning reagent 34 in the reaction container 1 transported to the magnetic separators 2 of the magnetic particle process unit 180 by the reaction container transportation mechanism 131, and the cleaning reagent 34 is aspirated and discharged in the cleaning tank 6 to clean the nozzles 51, 52, and 53. Specifically, in the nozzle cleaning operation, the nozzles 51, 52, and 53 are immersed in and brought into contact with the cleaning reagent 34 in the reaction container 1 to clean an outer wall of each of the nozzles, and the cleaning reagent 34 is aspirated into the nozzles 51, 52, and 53 to clean the inner wall of each of the nozzles. The cleaning reagent 34 aspirated into the nozzles 51, 52, and 53 is discharged in the cleaning tank 6, and then the inner and outer walls of each of the nozzles are cleaned with the pure water 61. The cleaning reagent (residual liquid 35 after cleaning) remaining in the reaction container 1 after cleaning the nozzles 51, 52, and 53 is disposed of together with the reaction container 1. A speed and timing of aspirating and discharging the cleaning reagent 34 by the nozzles 51, 52, and 53, the operation of the nozzle (amount of immersion in the cleaning reagent 34), and the like are appropriately changed depending on a type and an amount of an adhering substance that needs to be removed, and are controlled to optimize a cleaning effect.

Effects of the present embodiment having the configuration described above will be described.

In the automatic analyzer, for example, a component in a sample may remain in a nozzle that aspirates and discharges the sample. When magnetic particles are used in a pre-process of the sample, the magnetic particles may adhere to and remain in the nozzle. Therefore, the automatic analyzer is generally provided with a mechanism for cleaning the nozzle. Such cleaning of the nozzle is often performed with water such as distilled water. However, a residue in the nozzle may not be sufficiently removed by cleaning with water due to chemical properties such as hydrophilicity and hydrophobicity, physical adhering to an uneven portion of a nozzle surface, and the like.

Since a remaining foreign matter in the nozzle leads to a decrease in analysis precision, it is necessary to sufficiently remove the residue. However, when an attempt is made to deal with the residue in the nozzle by periodically cleaning or replacing the nozzle by a user, maintenance becomes complicated, and an operation cost of the apparatus increases. Although it is conceivable to automatically clean the nozzle by separately providing a mechanism for supplying a liquid such as a probe cleaner containing an organic solvent to a cleaning mechanism, this leads to an increase in size, complexity, and cost of the analyzer.

On the other hand, in the present embodiment, since the cleaning method for the nozzle of the automatic analyzer 100 including the reaction container 1 which stores the mixed liquid of the sample of an analysis object and the reagent used for the analysis and the nozzles 51, 52, and 53 each of which aspirates the mixed liquid in the reaction container 1 includes a preparation step of dispensing the probe cleaner of the nozzles 51, 52, and 53 to the reaction container 1 and a cleaning step of aspirating and discharging the probe cleaner in the reaction container 1 by the nozzles 51, 52, and 53, it is possible to prevent maintenance from becoming troublesome, a cost, the analyzer from becoming large in size and complicated, and the like, and capable of executing cleaning of the nozzle reliably by a simpler method.

### <Second Embodiment>

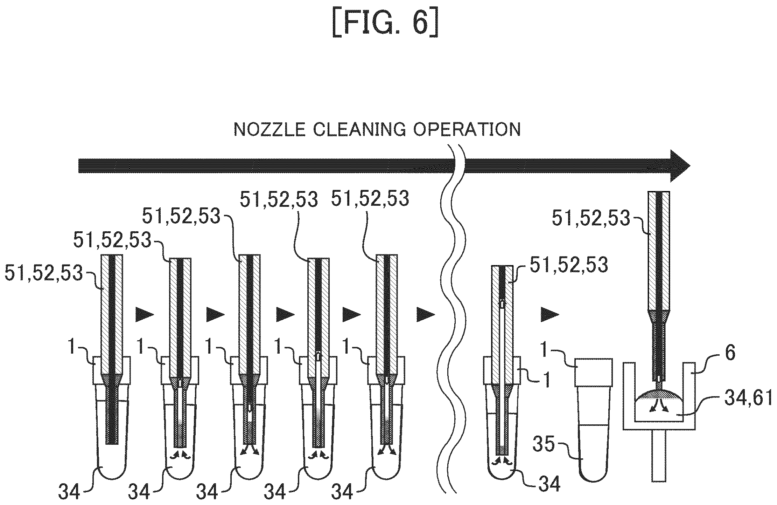

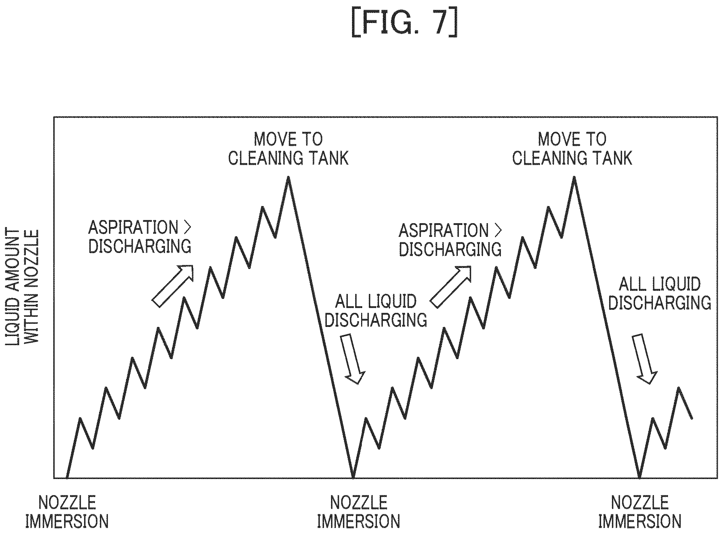

A second embodiment will be described with reference to FIGS. 6 and 7.

In the present embodiment, the same components as those in the first embodiment are denoted by the same reference numerals, and description thereof will be omitted as appropriate.

The present embodiment illustrates another example of the nozzle cleaning operation in the nozzle cleaning process.

FIG. 6 is a diagram illustrating a state of the nozzle cleaning operation. In addition, FIG. 7 is a diagram illustrating a change in the liquid amount in the nozzle due to aspiration and discharge of a cleaning detergent during the nozzle cleaning operation.

As illustrated in FIGS. 6 and 7, in the nozzle cleaning operation, the aspiration nozzles 51, 52 and the SN nozzle 53 are inserted and immersed in the cleaning reagent 34 in the reaction container 1 transported to the magnetic separators 2 of the magnetic particle process unit 180 by the reaction container transportation mechanism 131, and the cleaning reagent 34 is aspirated and discharged in the cleaning tank 6 to clean the nozzles 51, 52, and 53. Specifically, in the nozzle cleaning operation, the nozzles 51, 52, and 53 are immersed in and brought into contact with the cleaning reagent 34 in the reaction container 1 to clean the outer wall of each of the nozzles, and the inner wall of each of the nozzles is cleaned by repeating aspiration of a predetermined amount of the cleaning reagent 34 into a corresponding one of the nozzles 51, 52, and 53 and discharge of an amount smaller than the predetermined amount. That is, in the nozzle cleaning operation, an aspiration amount of the cleaning reagent 34 is set to be small and a discharge amount is set to be smaller than the aspiration amount (aspiration amount > discharge amount), the aspiration and the discharge are repeated a certain number of times, and then each of the nozzles 51, 52, and 53 moves to the cleaning tank 6 in a state where the cleaning reagent 34 is finally aspirated. The cleaning reagent 34 aspirated into the nozzles 51, 52, and 53 is discharged in the cleaning tank 6, and then the inner and outer walls of each of the nozzles are cleaned with the pure water 61. The cleaning reagent (residual liquid 35 after cleaning) remaining in the reaction container 1 after cleaning the nozzles 51, 52, and 53 is disposed of together with the reaction container 1.

Other configurations are the same as those of the first embodiment.

In the present embodiment having the configuration described above, the same effect as that in the first embodiment can also be obtained.

In addition, since a flow direction of the cleaning reagent is frequently changed between the inside and the outside of the nozzle, a turbulent flow occurs in the cleaning reagent inside and outside the nozzle in the reaction container 1, so that an improvement in the cleaning effect of the outer wall of the nozzle can be expected, and since an apparent flow rate of the cleaning reagent inside the nozzle greatly increases, a further improvement in the cleaning effect can be expected.

### <Appendix>

The invention is not limited to the embodiments described above and includes various modifications and combinations without departing from the gist of the invention.

That is, the number of times of the nozzle cleaning operation in the nozzle cleaning process can be appropriately set according to the type and the amount of the adhering substance in the nozzle. Therefore, for example, the nozzle may be immersed again in the probe cleaner in the same reaction container to repeatedly perform the nozzle cleaning operation. In this case, a lowering amount of the nozzle is increased in consideration of the liquid amount of the cleaning reagent 34 reduced by the aspiration and the discharge to the cleaning tank 6.

The nozzle cleaning process may be performed using a plurality of reaction containers 1, and the reaction containers 1 into which the cleaning reagent 34 is dispensed are prepared according to the preset number of reaction containers 1.

Further, a timing of executing the nozzle cleaning process can be freely set. Therefore, the nozzle cleaning operation may be performed not only at the time of startup or shutdown of the automatic analyzer but also during the pre-analysis process. Alternatively, by setting the automatic analyzer in advance, the nozzle cleaning process may be automatically performed when the sample process is performed a certain number of times.

The invention is not limited to having all configurations described in the embodiments described above and includes a configuration in which a part of the configurations is deleted. Some or all of configurations, functions, and the like described above may be implemented by, for example, designing with an integrated circuit. In addition, the configurations, functions, and the like described above may be implemented by software by a processor interpreting and executing a program for implementing each function.

### Reference Signs List

- 1, 1a: reaction container
- 2: magnetic separator
- 3: sample container
- 4: reagent container
- 6: cleaning tank
- 8: reaction container storage unit
- 10: magnetic particle
- 11: solution
- 12: system probe cleaner
- 13: system reagent
- 14: solution
- 31: sample rack
- 32: sample
- 33: mixed liquid
- 34: cleaning reagent
- 35: residual liquid
- 51: aspiration nozzle
- 52: aspiration nozzle
- 53: SN nozzle
- 61: pure water
- 71, 72: discharging nozzle
- 73: transferring nozzle
- 100: automatic analyzer
- 101: pre-process unit
- 102: analysis unit
- 110: sample container transportation mechanism
- 120: reagent disk
- 130: reaction container storage unit
- 131: reaction container transportation mechanism
- 132: reaction container disposal box
- 140: incubator
- 141: reaction container storage unit
- 150: sample dispensing mechanism
- 160: reagent dispensing mechanism
- 180: magnetic particle process unit
- 181: magnetic particle cleaning mechanism
- 182: elution mechanism
- 183: SN dispensing mechanism

## Claims

1. A cleaning method for a nozzle of an automatic analyzer, the automatic analyzer including a reaction container and a nozzle, the reaction container storing a mixed liquid of a sample of an analysis object and a reagent used for analyzing the sample, the nozzle aspirating the mixed liquid of the reaction container,
the cleaning method comprising:
a preparation step for dispensing a probe cleaner of the nozzle to the reaction container; and
a cleaning step for executing aspiration and discharging of the probe cleaner of the reaction container by the nozzle.

2. The cleaning method according to claim 1, wherein
the probe cleaner dispensed to the reaction container in the preparation step is at least one of a plurality of reagents mounted on the automatic analyzer.

3. The cleaning method according to claim 1, wherein
the probe cleaner is aspirated gradually in the cleaning step by repeating aspiration of a predetermined amount of the probe cleaner by the nozzle and discharging of an amount less than the predetermined amount.

4. An automatic analyzer, comprising:
a sample container storing a sample;
a plurality of reagent containers storing a reagent used for analysis of the sample;
a reaction container for generating a mixed liquid of the sample and the reagent; and
a nozzle aspirating the mixed liquid from the reaction container, wherein
the nozzle is cleaned by dispensing a probe cleaner of the nozzle to the reaction container and executing aspiration and discharging of the probe cleaner of the reaction container by the nozzle.
